# EUROPEAN PATENT SPECIFICATION

(11) **EP 2 947 635 B1**
(45) Date of publication and mention of the grant of the patent: **19.12.2018**
(21) Application number: 15168506.2
(22) Date of filing: 20.05.2015
(51) Int. Cl.: G08C 17/02

(54) **DISPLAY APPARATUS, REMOTE CONTROL APPARATUS, SYSTEM AND CONTROLLING METHOD THEREOF**
ANZEIGEVORRICHTUNG, FERNSTEUERUNGSVORRICHTUNG, SYSTEM UND STEUERUNGSVERFAHREN DAFÜR
APPAREIL D'AFFICHAGE, APPAREIL DE COMMANDE À DISTANCE, SYSTÈME ET PROCÉDÉ DE COMMANDE DE CELUI-CI

(30) Priority: 21.05.2014 KR 20140061055; 27.11.2014 KR 20140167517
(43) Date of publication of application: 25.11.2015
(73) Proprietor: Samsung Electronics Co., Ltd., Suwon-si, Gyeonggi-do (KR)
(72) Inventor: Lee, Sang-jun, Gyeonggi-do (KR); Ka, Jee-hoon, Gyeonggi-do (KR); Kim, Kwang-soo, Seoul (KR); Ryu, Hee-seob, Gyeonggi-do (QA)
(74) Representative: Walaski, Jan Filip

(56) References cited:
- US-A1- 2011 191 108
- US-A1- 2012 239 396

## Description

The present invention relates to a display apparatus, a remote control apparatus, a system, a controlling method thereof, and more specifically, to a display apparatus controllable based on at least one of a pointing signal, a user motion and a user voice, a remote control apparatus, a system and a controlling method thereof.

Recently, due to advancing electronic technology, various types of electronic products have been developed and provided. Specifically, various display apparatuses, including televisions (TVs), mobile phones, personal computers (PCs), laptop PCs, or personal digital assistants (PDAs) have become increasingly widespread and are now a part of many average households.

As display apparatuses are utilized for a diverse array of purposes, users desire additional various functions. Therefore, manufactures' efforts to meet user demand have increased greatly, and new products with additional functions have been released.

Accordingly, the number of functions performed by the display apparatuses has increased. Particularly, display apparatuses are implemented to recognize user voice and perform a control operation corresponding to the recognized user voice, or recognize user motion and perform a control operation corresponding to the recognized user motion. Further, the display apparatuses may additionally be controlled by a user's voice and motion.

However, in a related art, content may be selected by using a pointing device, and in order to search information related to the selected content, the user has to move to a search screen and input search words or convert an operating mode of the display apparatuses into a voice recognition mode.

Thus, a display apparatus is needed to perform control operations based on both control signals received from a remote control apparatus, a user's motion and the user's voice as recognized, without requiring a user to move to a search screen or convert a mode of the display apparatus in order to perform searching.

Publication US2012/0239396 is one example addressing this need.

Exemplary embodiments may overcome the above disadvantages and other disadvantages not described above. Also, exemplary embodiments are not required to overcome the disadvantages described above, and an exemplary embodiment may not overcome any of the problems described above.

According to an exemplary embodiment, a display apparatus is controllable based on at least one of a pointing signal, user motion and user voice, a remote control apparatus, a system and a controlling method thereof.

According to an aspect of an exemplary embodiment, a display apparatus, is set out as defined in claim 1.

The processor may be further configured to extract the keyword by analyzing the selected item.

The processor may be further configured to control the communicator to transmit information regarding the selected item to an external server, and receive the keyword from the external server.

The processor may be further configured to control the input device to stop control operation corresponding to the received pointing and control the input device to perform voice recognition in response to the item being selected based on the pointing signal.

The processor may be further configured to control the input device to resume the control operation corresponding to the received pointing signal in response to the voice command not being received for a preset time.

The processor may be further configured to control the input device to stop performing voice recognition and to perform gesture recognition in response to not receiving the voice command for a preset time while the voice recognition is performed.

The processor may be further configured to control the put device to simultaneously perform voice recognition and gesture recognition.

The display apparatus may further include: an object register configured to store a shape of an object. The processor may be further configured to control the input device to receive an object gesture performed by the object as the gesture and perform a control operation corresponding to the object gesture.

The input device may include an apparatus configured to receive voice and motion, which is attachable to and detachable from the display apparatus.

According to another exemplary embodiment, a system is provided as set out in claim 9.

According to another exemplary embodiment, a method of controlling a display apparatus is provided as set out in claim 10.

The extracting may include analyzing the selected item and extracting the keyword based on the analyzing.

The extracting may include transmitting information corresponding to the selected item to an external server, and receiving the extracted keyword from the external server.

The method may further include stopping control operation corresponding to the received pointing signal and controlling the input device to perform voice recognition in response to the item being selected based on the pointing signal.

According to another exemplary embodiment, a non-transitory computer readable medium containing program instructions for causing at least one processor to perform a method in combination with a display apparatus configured to display a plurality of items, wherein the method includes: communicating with a remote control apparatus; determining one focused item among the plurality of displayed items based on at least one of a pointing signal received from the remote control apparatus and a received user motion; receiving a voice command corresponding to the determined one item; extracting a keyword from the voice command; and performing a control operation based on the extracted keyword.

According to another exemplary embodiment, a non-transitory computer readable medium containing program instructions for causing at least one processor to perform a method in combination with a remote control apparatus, wherein the method includes: communicating with a display apparatus displaying a plurality of items; and transmitting a pointing signal to indicate one item among the plurality of the items; stopping the transmitting in response to a preset event; receiving a voice command corresponding to the indicated one item; and transmitting the voice command to the display apparatus.

According to another exemplary embodiment, a display device includes: a display configured to display an image; an input device configured to receive a gesture performed by a user; an audio capturer configured to capture a voice command performed by the user; a communicator; and a processor configured to determine a selected object of the image corresponding to the gesture, to control the communicator to transmit a search request based on the selected object and the voice command, to receive a search result and to control the image displayed on the display to correspond to the search result.

The input device may include a gaze sensor and the processor may be further configured to recognize the gesture based on a gaze of the user.

The processor may be further configured to control the audio capturer to convert the voice command to a text command, and the search request may include the text command.

According to another exemplary embodiment, a remote control device includes: an imaging device configured to analyze a received image; an input device configured to receive a user input; a display configured to display search information; a communicator; and a processor configured to determine a selected object of the received image corresponding to the user input, to control the communicator to transmit a search request based on the selected object, to receive a search result and to control the display to display the search result as the search information.

According to the above various exemplary embodiments, a user may intuitively select and implement programs or content which he requests and the user convenience can be enhanced.

The above and/or other aspects will be more apparent by describing certain exemplary embodiments with reference to the accompanying drawings, in which:
FIG. 1 is a block diagram of a display apparatus according to an embodiment;
FIG. 2 illustrates a display apparatus being controlled based on a pointing signal and user voice according to an embodiment;
FIG. 3 illustrates an exemplary voice control system according to an embodiment;
FIG. 4 is a block diagram of a server apparatus according to an embodiment;
FIG. 5 is a detailed block diagram of a display apparatus according to an embodiment;
FIG. 6 is a detailed block diagram of a display apparatus according to an embodiment;
FIG. 7 illustrates a display apparatus recognizing motions of various forms of registered objects according to an embodiment;
FIG. 8 illustrates a display apparatus providing an interactive service according to an embodiment;
FIG. 9 is a block diagram of a remote control apparatus according to an embodiment;
FIG. 10 illustrates a system including a display apparatus and a remote control apparatus according to an embodiment;
FIG. 11 is a flowchart illustrating a controlling method of a display apparatus including a display displaying a plurality of items and a recognizer recognizing at least one of user voice and motion according to an embodiment;
FIG. 12 is a flowchart illustrating a controlling method of a remote control apparatus according to an embodiment; and
FIG. 13 illustrates a motion recognition and a voice recognition being performed simultaneously according to an embodiment.

Exemplary embodiments will now be described in greater detail with reference to the accompanying drawings.

In the following description, same drawing reference numerals are used for the like or similar elements, even in different drawings. The matters defined in the description, such as detailed construction and elements, are provided to assist in a comprehensive understanding. Accordingly, it is apparent that the exemplary embodiments can be carried out without those specifically defined matters. Also, well-known functions or constructions are not described in detail because they would obscure the disclosure with unnecessary detail.

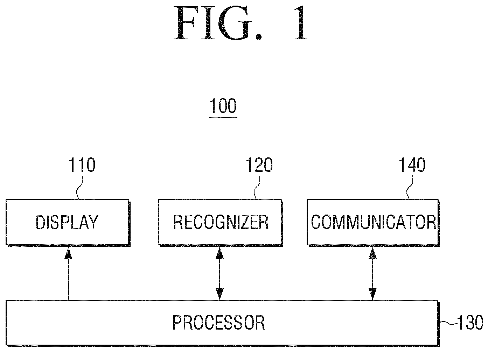

Referring to FIG. 1, a display apparatus 100 includes a display 110, a recognizer 120, a processor 130, and a communicator 140. Herein, the display apparatus 100 may be implemented in various electronic devices, such as TVs, electronic boards, electronic tables, Large form Displays (LFDs), smart phones, tablet PCs, desktop PCs, and laptops.

The display 110 may display a plurality of items. Herein, a plurality of items may include still video images, video images and documents. For the above, the display 110 may be implemented as a Liquid Crystal Display (LCD), Organic Light Emitting Display (OLED), Plasma Display Panel (PDP), or any other type of display.

According to an exemplary embodiment, the communicator 140 may be implemented as a hardware component. The communicator 140 may communicate with a remote control apparatus. Specifically, the communicator 140 may perform communication with the remote control apparatus according to the wireless communication method or IR method. For the wireless communication method, RFID, Near Field Communication (NFC), Bluetooth, Zigbee, or Wi-Fi may be used.

According to an exemplary embodiment, the recognizer 120 may be implemented as a hardware component. The recognizer 120 may recognize at least one of user voice and user motion. Herein, the recognizer 120 may include an input device configured to receive an input of the user voice and the user motion. The input device may directly receive the input of the user voice when a microphone is included therein or indirectly receive user voice input through a microphone provided on the remote control apparatus. Further, the input device may directly receive the input of the user motion when an imaging device, e.g., a photographing device, is included internally, or indirectly receive the input of the user motion input through a lens provided on the remote control apparatus such as remote controller or smart phone.

Thus, when the microphone and the imaging device are provided on the remote controller, a user may control the display apparatus 100 without being directly in front of the display apparatus 100.

For example, in a situation that the display apparatus 100 is placed in the living room and a user is in the kitchen, without moving to the living room where the display apparatus 100 is placed, a user may make motion through the imaging device provided on the remote controller in the kitchen. The remote controller may then transmit the motion image stored through the imaging device to the display apparatus 100 and the processor 130 of the display apparatus 100 may recognize the motion from the transmitted motion image and perform a function corresponding to the recognized motion.

Further, without moving to the living room where the display apparatus 100 is placed, a user may utter a voice command through the microphone provided on the remote controller in the kitchen. The remote controller may then transmit the voice recorded through the microphone to the display apparatus 100, and the processor 130 of the display apparatus 100 may recognize the voice from the received voice and perform a function corresponding to the recognized voice.

Meanwhile, the above described remote controller is only one exemplary type of remote control apparatus 1100, and the remote control apparatus 1100 is not limited to the above described operations. Accordingly, the remote controller may be any type, such as smart phone and pointing device, that can be used as remote control apparatus 1100.

Further, the recognizer 120 may include a voice and motion recognition device which is attachable to, and detachable from the display apparatus 100. Thus, the recognizer 120 may be provided on the display apparatus 100. However, the recognizer 120 may be also implemented as a voice and motion recognition device which is detachable and attachable. Accordingly, a user may attach and use a voice and motion recognition device to the display apparatus 100.

Meanwhile, the processor 130 is generally responsible for controlling a device, and may be interchangeable with a central processing unit, a microprocessor or a controller. The processor controls the overall operations of a device and may be implemented as a system-on-a-chip (SOC) or a system on chip (SoC) in combination with other functionality such as the recognizer 120 or the communicator 140.

The processor 130 may select one item from a plurality of items based on at least one of a pointing signal received from the remote control apparatus and recognized user motion. In response to receiving a user voice command regarding the selected item, the processor 130 may perform a control operation based on extracted keywords to execute the received voice command. Specifically, the processor 130 may select one item among a plurality of items based on a pointing signal received from the remote control apparatus or based on user motion recognized through the recognizer 120. Further, the processor 130 may display an indicator which corresponds to a pointing signal received from the remote control apparatus or to recognized user motion.

For example, the processor 130 may display an indicator on the display 110, and perform an operation of moving the displayed indicator in accordance with motion of a pointing signal received from the remote control apparatus or the user motion. Thus, when the pointing signal moves from the left to the right, or when the user motion is to move his hand from the left to the right, the processor 130 may perform the operation of moving the indicator from the left to the right on the display 110 so as to correspond to the user motion.

Further, when the indicator is positioned on one item among a plurality of the items displayed on the display 110, the processor 130 may determine that the item on which the indicator is positioned, is selected.

Further, when the item is selected in response to receiving a user voice command regarding the selected item, the processor 130 may extract keywords related to the selected item for executing the received voice command, and perform the processing based on the extracted keywords.

Specifically, the processor 130 may extract keywords by analyzing the selected item.

For example, when the indicator selects the drama video and when a user speaks a voice command stating, "What are other movies or dramas in which this drama's main actor acts?", the processor 130 may extract keywords related to the drama main actor by analyzing the selected drama video. Herein, the keywords related to the drama main actor may be name of an entertainer acting as a main actors.

Further, while the content (e.g., movie) is playing, in response to a motion of an indicator selecting one object among the displayed video images and in response to a user speaking a voice command stating that "What is this?", the processor 130 may extract keywords related to the selected object by analyzing the selected movie video. Thus, when the displayed video is related to travel to Spain, and one restaurant in Spain is displayed in the video images, the processor 130 may analyze the video images to execute the user voice command stating that "What is this?" and extract the name of the restaurant in Spain.

The processor 130 may perform the control operation based on the extracted keywords. In the above case, the processor 130 may search other movies or dramas in which the entertainer acts. For example, in response to the user query regarding the main actor, the processor 130 may search an external server or another web site based on the keywords related to the name of the entertainer acting as one of main actors, and provide the search results to the user. Further, in response to the user voice command stating that "What is this?", the processor 130 may provide information related to the restaurant from the external server or another web site to a user based on the name of the Spanish restaurant.

In the above example, the content may include information regarding the objects included in the video as well as information regarding the video. The processor 130 may analyze the information regarding the objects included in the video, and extract keywords corresponding to the user voice command. The information regarding the objects may be included in the content as additional information.

Meanwhile, the information regarding the objects in the video may be stored in the external server, instead of being included in the content as additional information. Thus, instead of analyzing the selected item internally and extracting keywords, the processor 130 may transmit the information regarding the selected item to the external server. The external server may extract keywords based on the information regarding the selected item, and transmit the extracted keywords to the display apparatus 100. Accordingly, the processor 130 may transmit the information regarding the selected content to the external server and receive the extracted keywords from the external server.

Further, when a user voice is an undefined spoken command, the processor 130 may perform corresponding operation to the command. Specifically, the processor 130 may analyze the user voice and provide an interactive service in response to the user voice. For example, when a user speaks "Actor ABCD," the processor 130 may search for various pieces of information including the texts regarding "Actor ABCD", and display the search results.

In the above described interactive service, the processor 130 may directly perform the operation to analyze the user voice and to convert the texts. However, in an alternative exemplary embodiment, the processor 130 may transmit the user voice to the external server, and receive the converted texts from the external server. The external server converting the voice into the texts may be referred to as a voice recognition apparatus for convenience of explanation. The following will more specifically explain an exemplary embodiment of interoperating with the voice recognition apparatus and converting the voice into the texts.

Meanwhile, the display apparatus according to an exemplary embodiment may perform a function of controlling the display apparatus correspondingly to a user voice command, in addition to the interactive function of searching correspondingly to a user voice command. Specifically, when the display apparatus 100 is TV, various voice commands may be stored that respectively correspond to various operations such as resolution conversion, brightness adjustment, color adjustment and screen mode conversion. When the item selected by the pointing signal or by the user motion is an environment set item, and when the recognized user voice is "Brightness adjustment", the processor 130 may perform a brightness adjustment function, which is one of the functions corresponding to the environment set item.

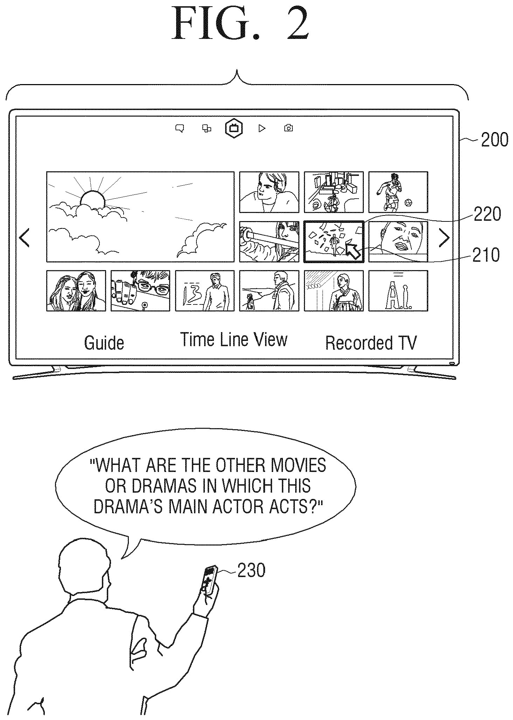

FIG. 2 illustrates a display apparatus being controlled based on the pointing signal and the user voice according to an exemplary embodiment.

Referring to FIG. 2, the display 200 of the display apparatus 100 may display a plurality of items, and the indicator 210 is marked on one item. Further, a highlighting 220 may be provided, indicating that the item is selected by the indicator 210. The shape of the indicator 210 may be a hand, an arrow or a variety of other shapes. In order to indicate that the item is selected, it is apparent that a voice output, an audio signal, or other various shapes of graphic components may be used, instead of or in addition to the highlighting 220.

The communicator 140 may perform communication with the remote control apparatus 230 and receive the pointing signal from the remote control apparatus 230. The processor 130 may move the position of the indicator 210 displayed on the display 200 based on the received pointing signal.

Further, when one of the items, for example drama content, is indicated as being selected based on the indicator 210, in response to receiving a voice command spoken by a user stating that "What are the other movies or dramas in which this drama's main actor acts?", the processor 130 may analyze the selected drama content in order to execute the received voice command and extract keywords related to the drama's main actor. Alternatively, the processor 130 may transmit the information regarding the selected drama content to the external server and receive the keywords related to the drama's main actor which are extracted by the external server.

Further, when the indicator 210 is positioned on one item and when the voice spoken by a user stating "Execute" is recognized, the processor 130 may perform a function corresponding to the selected item based on the same. For example, when the selected item represents a video, the processor 130 may play back the selected video.

Meanwhile, the above exemplary embodiment is an example in which the processor 130 may move the indicator 210 in order to select one item among a plurality of items according to the pointing signal received by the communicator 140 or the user motion recognized through the recognizer 120. However, the processor 130 may display the indicator 210 as selecting one item among a plurality of items based on the recognized user voice, and perform a function corresponding to the selected item based on the recognized user motion.

For example, the processor 130 may perform an operation of moving the displayed indicator on the display 110 according to a user voice recognized through the recognizer 120. Thus, when a user speaks, "Select the environment set item" or "Third item from the left," the processor 130 may move and position the indicator on the environment set item or on the third item placed from the left, according to the user voice.

Further, the processor 130 may perform a function corresponding to the selected item based on a user motion recognized through the recognizer 120. Specifically, a motion corresponding to an "Execute" command may be designated as clenching fist and such may be stored in the display apparatus 100. Further, when the selected item is a video file and when the recognizer 120 recognizes the fist clenching, the processor 130 may reproduce the selected video file.

Accordingly, the processor 130 may select one item among a plurality of items based on the combination of a pointing signal received from the remote control apparatus 230 and the recognized user voice and user motion, and perform the control operation to implement the function corresponding to the selected item.

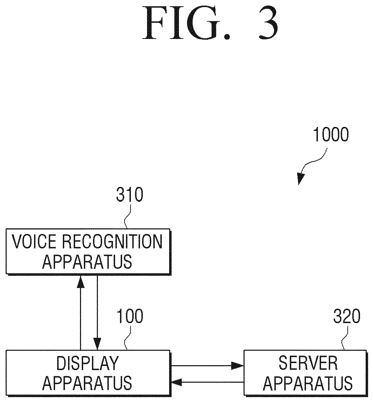

FIG. 3 illustrates an exemplary constitution of a voice control system according to an exemplary embodiment. Referring to FIG. 3, the voice control system 1000 includes a voice recognition apparatus 310, a server apparatus 320, and a display apparatus 100.

The display apparatus 100 may include an interactive client module which is interoperable with the voice recognition apparatus 310 and the server apparatus 300. The processor 130 may implement the interactive client module when the user voice is recognized through the recognizer 120, and perform a control operation corresponding to the voice input. Specifically, the processor 130 may transmit the user voice to the voice recognition apparatus 310.

The voice recognition apparatus 310 indicates one type of the server apparatus which converts the user voice transmitted through the display apparatus 100 into texts and provides the texts.

The voice recognition apparatus 310 may recognize the voice by using at least one of various recognizing algorithms, such as dynamic time warping method, Hidden Markov Model, and Neural Network, and convert the recognized voice into texts. For example, when Hidden Markov Model is used, the voice recognition apparatus 310 may respectively model temporal and spectral changes in response to the user voice, and recover similar words from a previously-stored language database. Therefore, the extracted words may be outputted as texts.

Thus, the voice recognition apparatus 310 may convert the voice command into texts and provide the texts to the display apparatus 100 in response to input of a voice command spoken by a user stating that "What are the other dramas or movies in which this drama's main actor acts?".

Further, when the texts are input from the voice recognition apparatus 310, the display apparatus 100 may perform a control operation corresponding to the input texts. Specifically, the processor 130 may receive texts corresponding to the transmitted voice and perform a function corresponding to the received texts. Thus, in response to receiving texts corresponding to "What are the other dramas or movies in which this drama's main actor acts?", the processor 130 may analyze the information regarding the drama in order to perform a function corresponding to the texts and extract keywords related to the main actor, and provide the search results as requested by a user based on the extracted keywords, i.e., provide a list regarding the other dramas or movies in which this drama's main actor acts.

Meanwhile, when there is a voice command corresponds to the texts among the preset voice commands, the processor 130 may perform a function corresponding to the voice command. However, when none of the voice commands corresponds to the preset voice command texts, the processor 130 may provide the texts to the server apparatus 320.

Further, when the texts are input from the voice recognition apparatus 310, instead of directly analyzing the information regarding the selected content, the processor 130 may transmit the texts input from the voice recognition apparatus 310 and the information regarding the content to the server apparatus 320, and receive the extracted keywords from the server apparatus 320.

Further, the server apparatus 320 may search the internal database or the other server apparatuses for information corresponding to the provided texts and the information of the selected content. Thus, the server apparatus 320 may determine which information to search, extract keywords related to the information of the selected content, and perform the searching based on the extracted keywords.

Further, the server apparatus 320 may feedback the search results to the display apparatus 100.

Thus, the processor 130 may transmit the user voice to the voice recognition apparatus 310 and receive texts corresponding to the user voice transmitted from the voice recognition apparatus. Further, the processor 130 may transmit the received texts to the server apparatus, receive search results corresponding to the texts from the server apparatus and display the same.

Meanwhile, although it is illustrated and described with reference to FIG. 3 that both the voice recognition apparatus 310 and the server apparatus 320 are included, one or the other may be excluded depending on exemplary embodiments.

For example, in an exemplary embodiment excluding the voice recognition apparatus 310, the processor 130 may perform the text conversion by using a stored text conversion module. Thus, when the user voice is recognized, the processor 130 may not transmit the user voice to the voice recognition apparatus 310, but convert the user voice into texts internally by implementing the text conversion module. Further, the processor 130 may analyze the content based on the converted texts, extract keywords and perform a control operation corresponding to the user voice. The processor 130 may also transmit the information regarding the content to the server apparatus 320, receive the extracted keywords from the server apparatus 320, and perform a control operation corresponding to the user voice.

Meanwhile, according to an exemplary embodiment, the processor 130 may directly perform the searching by using the converted texts of the voice recognition apparatus 310. Thus, the processor 130 may analyze the content based on the converted texts, extract keywords, implement the stored searching module, perform the searching by inputting the keywords into the searching module, and display the search results.

As explained above, the voice control system may be implemented in various forms, and the constitution and operation of the display apparatus 100 may be variously modified according to the forms of the voice control system.

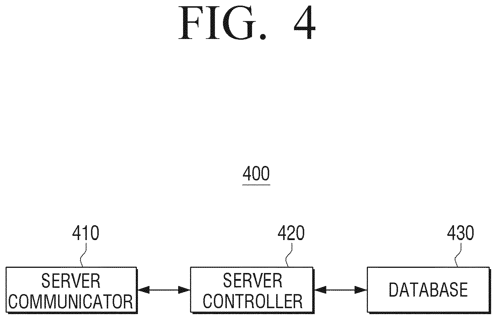

FIG. 4 is a block diagram of a server apparatus according to an exemplary embodiment.

Referring to FIG. 4, the server apparatus 400 includes a server communicator 410, a server controller 420, and a database 430.

The server communicator 410 is configured to perform communication with the display apparatus 100. The server communicator 410 may receive texts corresponding to the user voice and information regarding the content from the display apparatus operating in the voice input mode.

The database 430 may store various pieces of content information. Specifically, various pieces of information, such as electronic program guide (EPG) information, hot movie information, cable broadcasting time schedule, or web site information, may be stored.

The server controller 420 may search the database 430 for the text and information corresponding to the content transmitted through the server communicator 410. Accordingly, the search results may be provided to the display apparatus 100.

Meanwhile, referring to FIG. 1 again, the processor 130 may stop a control operation corresponding to the received pointing signal and perform the voice recognition, when one item is selected among a plurality of items based on a pointing signal received from the remote control apparatus 230.

Thus, when one item is determined to be selected by the pointing signal received from the remote control apparatus 230, the processor 130 may stop the control operation corresponding to the pointing signal, e.g., the operation of moving the indicator according to the pointing signal even when the pointing signal is received, and wait for a user voice command by automatically performing the voice recognition.

Further, when the user voice is not recognized for a preset time while the voice recognition is performed, the processor 130 may perform a control operation corresponding to the received pointing signal again.

For example, by assuming that the preset time is set to be 2 seconds, when the user voice is not recognized for 2 seconds while the voice recognition is performed, the processor 130 may perform the operation of moving the indicator according to the pointing signal again. Herein, the processor 130 may again move the position of the indicator by considering the pointing signal received after for the preset time.

Even when the user motion is recognized instead of the user voice while the voice recognition is performed, the processor 130 may perform a function corresponding to the selected item based on the user motion.

Further, the processor 130 may inform a user that the voice recognition is performed. For example, the processor 130 may display an icon indicating that the voice recognition is performed or inform a user by using sounds, LED marking, or vibrations.

Further, the above describes that the processor 130 may perform the voice recognition to select one item when the indicator is positioned on one item among a plurality of the items displayed on the display 110. Meanwhile, the above describes that one item is selected among a plurality of the items based on the pointing signal. However, the above process may be equally applied to a case in which one item is selected among a plurality of the items based on a recognized user motion.

Thus, when one item is selected among a plurality of the items based on the recognized motion, the processor 130 may perform the voice recognition without performing the motion recognition.

Specifically, when one item is determined to be selected among a plurality of items based on the recognized motion, the processor 130 may not perform the motion recognition. Thus, the user motion may not be further recognized, and the position moving of the indicator corresponding to the user motion may not be performed. Further, the processor 130 may wait for a user voice command while the voice recognition is performed.

Meanwhile, when the user voice is not recognized for a preset time while the voice recognition is performed, the processor 130 may perform the motion recognition without performing the voice recognition.

For example, by assuming that the preset time is set as 2 seconds, when the user voice is not recognized for 2 seconds while the voice recognition is performed, the processor 130 may recognize the user motion by performing the motion recognition again, and perform the operation of moving the indicator according to the user motion again. Herein, the processor 130 may move position of the indicator by considering the user motion received for a preset time.

Meanwhile, as explained in the above exemplary embodiment, the remote control apparatus may be a remote controller, but is not limited thereto. The remote control apparatus may be smart phone, in which case the indicator may be adjusted by performing a mirroring function between the smart phone and the display apparatus 100. The mirroring function is well known in the art, and will not be further explained herein.

Further, as explained in the above exemplary embodiment, the processor 130 may alternately perform the voice recognition and the motion recognition such as performing the motion recognition without performing the voice recognition and performing the voice recognition without performing the motion recognition. However, the processor 130 may continue simultaneously performing the voice recognition and the motion recognition.

Thus, the processor 130 may perform a control operation respectively corresponding to the recognized user motion and the recognized user voice by simultaneously performing the voice recognition and the motion recognition.

Specifically, when the processor 130 alternately performs the voice recognition and the motion recognition, only one of the user voice and the user motion may be recognized, and the user motion and the user voice which are simultaneously received may not be recognized at once. Further, when the processor 130 simultaneously performs both of the voice recognition and the motion recognition, the user motion and the user voice which are simultaneously received may be respectively recognized, and control operations corresponding to the recognized motion and the recognized voice may be respectively performed.

Accordingly, when both of the voice recognition and the motion recognition are being performed, a user may control the display apparatus 100 by simultaneously motioning and speaking. Otherwise, i.e., when the voice recognition and the motion recognition are alternately performed, there is an effect that a delay may occur in recognizing and processing the motion and the voice, resulting in a reduced performance.

For example, when a user states, "What is the weather like today?" while motioning with his hand to control the pointing object displayed on the display 110, the processor 130 may extract the keyword, "weather," from the recognized voice stating that "What is the weather like today?" and provide the search results by implementing an application program related to the "weather" or displaying related sites simultaneously, while the processor 130 controls movement of the pointing object correspondingly to the recognized motion.

In this case, the processor 130 may divide a displayed screen on the display 110 and display the pointing object moving correspondingly to the recognized motion on one of the divided screens and display the search results regarding the "weather" on another of the divided screens. Further, the processor 130 may provide search results related to the "weather" in on-screen display (OSD) form or picture-in-picture (PIP) form without dividing the screen.

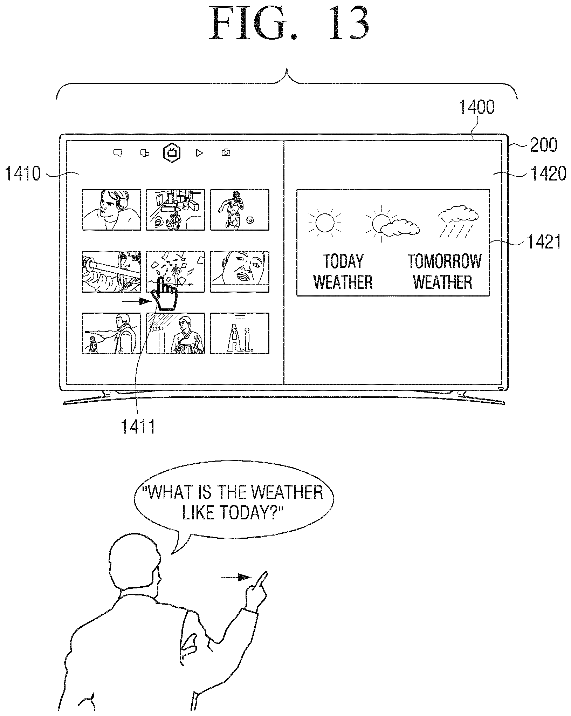

FIG. 13 is a diagram provided to explain that the motion recognition and the voice recognition are simultaneously performed according to an exemplary embodiment.

Referring to FIG. 13, the screen 1400 displayed on the display 200 may include two divided screens 1410, 1420. Further, the left screen 1410 may display the pointing object 1411 moving correspondingly to the recognized user motion, and the right screen 1420 may display the search results 1421 according to the recognized voice command spoken by a user stating, "What is the weather like today?"

Thus, instead of limitedly allowing the user to control the display apparatus 100 either by motion or by voice, the processor 130 performs both the voice and motion recognitions together, thus enhancing user convenience by allowing the user to control the display apparatus 100 to simultaneously perform multiple functions, or to control through a combination of motion and voice.

Meanwhile, the processor 130 may control the display apparatus 100 by using the sensed direction of gaze, as well as by using at least one among a pointing signal received from the remote control apparatus, the user motion and the user voice. Further, the processor 130 may control the display apparatus 100 by recognizing motions of the various objects.

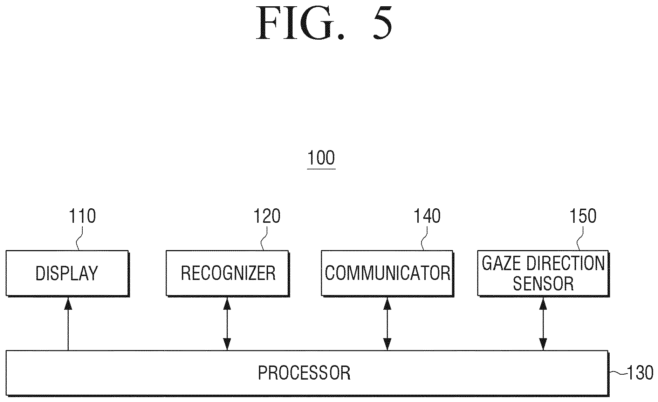

FIG. 5 is a detailed block diagram of a display apparatus configured to perform a control operation by sensing a direction of gaze according to an exemplary embodiment.

Referring to FIG. 5, the display apparatus 100 includes a display 110, a recognizer 120, a processor 130, a communicator 140 and a gaze direction sensor 150. Herein, the display 110, the recognizer 120, and the communicator 140 are described above, and these will not be further explained below for the sake of brevity.

The gaze direction sensor 150 may sense a direction of gaze of a user. Specifically, the gaze direction sensor 150 may extract the direction of gaze by using an infrared ray. As an infrared outputter provided on the display apparatus 100 outputs the infrared rays toward a user, a glint area may be marked on the eyes of the user reflecting the output infrared rays, and the processor 130 may determine the direction of gaze of the user based on relative positions between the pupils and irises of the user, and the glint area marked by the infrared rays. The relative positions may indicate relations regarding distance between the center of the pupil and the center of the glint area with size of the iris.

For example, the processor 130 may extract direction of gaze of a user according to the values obtained from comparing the distance between the center of the pupil and the center of the glint area with the size of the iris.

Meanwhile, the gaze direction sensor 150 may sense direction of gaze of a user in combination with the pattern learning. Specifically, a storage of the display apparatus 100 may store various images of the eyes watching each area on the display 110. Further, the processor 130 may compare the recognized eye image with the various stored images, and sense a direction of gaze of the user.

The processor 130 may display the indicator to indicate one selected item among a plurality of items based on the sensed direction of gaze of a user. When one item is selected among a plurality of items, the processor 130 may receive a user voice command regarding the selected item. The processor 130 may then perform the control operation based on a keyword extracted. Further, the processor 130 may perform a function corresponding to the selected item based on the recognized user voice command.

Specifically, the processor 130 may move the indicator displayed on the display 110 in order to correspond to the sensed direction of gaze of a user.

Further, when the displayed indicator is positioned on one item, according to the sensed direction of gaze of a user, the processor 130 may determine that the item at which the indicator is positioned, is selected.

Further, the processor 130 may analyze the selected item based on the recognized user voice through the recognizer 120 and extract keywords while the item is selected. Alternatively, the processor 130 may transmit the information regarding the selected content to the external server, receive the extracted keywords from the external server, and perform the control operation based on the extracted keywords. Further, the processor 130 may perform a function corresponding to the selected item based on the user voice.

Further, even when the user motion, instead of the user voice, is recognized through the recognizer 120 while the item is selected, a function corresponding to the selected item may be performed based on the recognized motion.

For example, when the motion of a user blinking his eyes for three times is recognized through the recognizer 120 while the item is selected, the processor 130 may perform a function corresponding to the selected item based on the recognized motion of blinking three times.

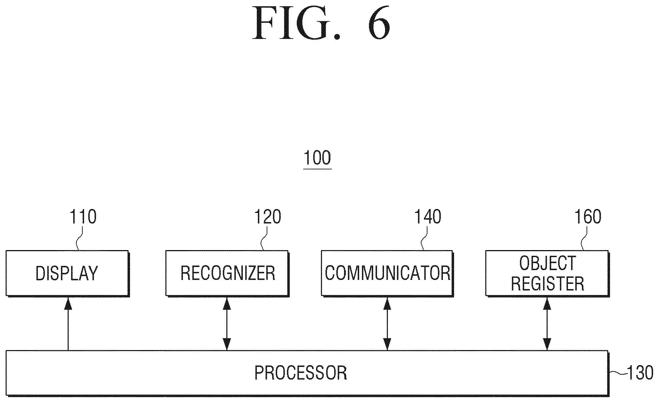

FIG. 6 is a detailed block diagram of a display apparatus which is controllable with various shapes of objects according to an exemplary embodiment.

Referring to FIG. 6, the display apparatus 100 includes a display 110, a recognizer 120, a processor 130, a communicator 140 and an object register 160. The display 110, the recognizer 120, and the communicator 140 have been described above, and will not be further explained below for the sake of brevity.

The object register 160 may register various shapes of objects. Herein, the objects may include various real objects that can be observed externally from the display apparatus 100. Particularly, various body parts of a user may be included. For example, the body parts may include the right foot, the left foot, the right hand, the left hand, the finger, the pupil, and the face. Meanwhile, objects, such as a remote controller, may also be registered through the object register 160.

The processor 130 may perform a control operation corresponding to the recognized motion of the object when the registered shape of the object is recognized.

For example, when a foot shape is registered through the object register 160, the processor 130 may move the displayed indicator correspondingly to the motion of the foot.

Further, when the pupil shape of a user is registered through the register 160, the processor 130 may move the displayed indicator in accordance with the motion, i.e., the movement of the pupil.

Additionally, the processor 130 may distinguish a user by recognizing the registered shape of the object.

Meanwhile, when the registered shape of the object is recognized, the processor 130 may perform a function corresponding to the selected item, as well as select one item among a plurality of items based on the recognized motion of the object. As described above, when the motion of eyes blinking three times is recognized, the processor 130 may perform a function corresponding to the selected item based on movement of the pupil in the same manner as the processor 130 performs the function corresponding to the selected item.

Further, the processor 130 may display an indicator corresponding to the registered shape of the object. For example, when the registered object is foot-shaped, the processor 130 may display a foot-shaped indicator. When the registered object is face-shaped, the processor 130 may display a face-shaped indicator. When the registered object is remote controller-shaped, the processor 130 may display a remote controller-shaped indicator. Accordingly, a user may confirm the currently registered object, and control the display apparatus 100 by using the registered object.

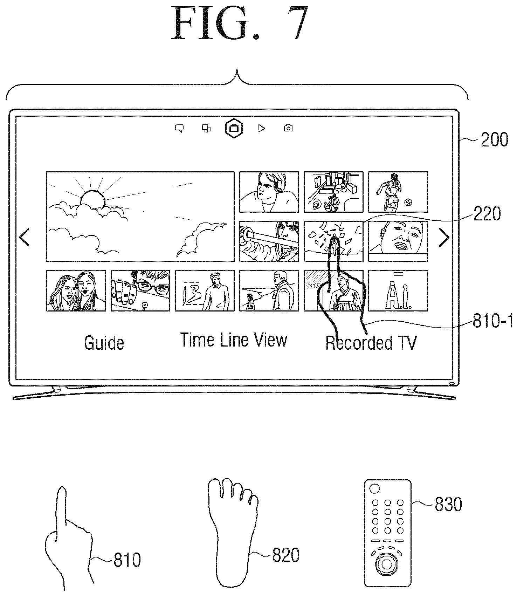

FIG. 7 is a diagram illustrating a display apparatus recognizing motion of the registered various shapes according to an exemplary embodiment.

Referring to FIG. 7, the object register 160 of the display apparatus 100 may register the finger shape 810 and the foot shape 820 which are body parts of a user. Further, the object register 160 may register product shapes, such as remote controller shape 830.

Further, the processor 130 may display an indicator 810-1 in a shape corresponding to the registered shape of the object on the display 200, and select the item 220 by converting a position of the indicator 810-1. For example, when the registered object is finger-shaped, the processor 130 may display the indicator 810-1 having a similar shape to the finger. Herein, the processor 130 may display the indicator using a shape corresponding to the registered object. Thus, the processor 130 may display a finger image on the display 200, and use it as an indicator. The above process may be equally applied to the foot shape 820 and the remote controller shape 830.

As described above, when one object is registered through the object register 160, the processor 130 may recognize the motion of the registered object and perform a control operation corresponding to the recognition. Thus, a user may control the display apparatus 100 by using various objects.

Further, because various objects may be registered through the object register 160, and the processor 130 may recognize motion of the registered objects and perform corresponding operation, convenience can be enhanced, especially for users have difficulty using their hands or feet, in controlling the display apparatus 100.

For example, for those who have difficulty using their hands, or those without hands, making motions with hands may be inconvenient or even impossible. In this case, a user may register another body part, such as an elbow or foot with the object register 160, and control the display apparatus 100 by moving the other body part.

Specifically, when an imaging device is provided on the object register 160, a user may register his elbow or foot as images in the object register 160 by using the imaging device. Further, the processor 130 may store the registered images of the elbow or the foot of a user, and use the stored images when recognizing the user elbow or the user foot. Further, the processor 130 may perform an operation corresponding to the recognized motion of the user elbow or the user foot.

As explained, the user elbow or foot may be used, although the exemplary embodiments are not limited thereto. Accordingly, the exemplary embodiments are equally applicable to the other various body parts.

Further, the above may be equally applied to other various objects. For example, a stick may be used instead of the remote controller. The processor 130 may store stick images and recognize a stick through the stored stick images. When a user swings a stick toward the right direction or the left direction, or when a user rotates a stick, the processor 130 may perform a corresponding function.

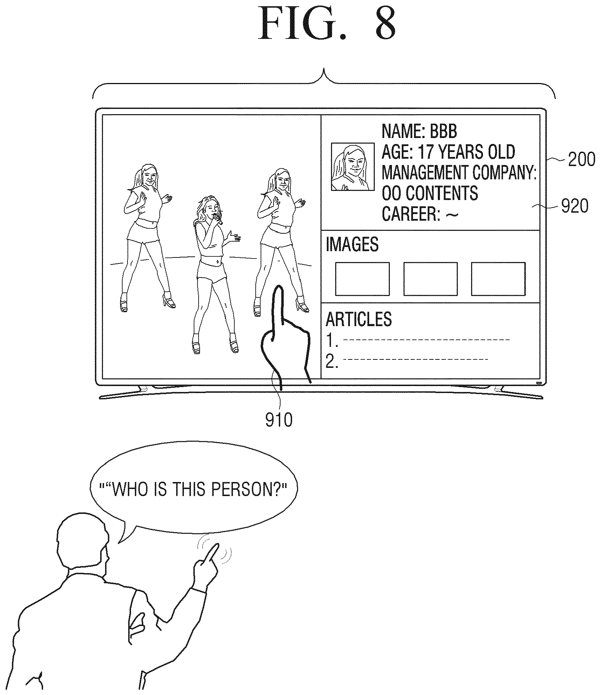

FIG. 8 is a diagram illustrating a display apparatus providing an interactive service according to an exemplary embodiment.

Referring to FIG. 8, when a video is played on the display 200, the processor 130 may display indicator 910 for a user to select a person in the video according to user motion recognized through the recognizer 120. When a voice stating "Who is this person?" is recognized through the recognizer 120 after a specific person in the video is selected, the processor 130 may transmit the voice stating "Who is this person?" to the voice recognition apparatus 310, as described in FIG. 3, and receive corresponding information from the voice recognition apparatus 310.

Further, to execute the user voice command corresponding to the received texts, the processor 130 may analyze the selected specific person in the video and extract keywords, and provide the search results regarding the specific person in the video based on the extracted keywords. Herein, the extracted keywords may be entertainer's name corresponding to the specific person in the video.

Further, the processor 130 may transmit the received texts and the information regarding the selected video to the server apparatus 620. The processor 130 may receive and display search results corresponding to the texts and the information regarding the selected video, i.e., the information 920 regarding person in the video corresponding to the voice stating that "Who is this person?" from the server apparatus 620.

The above described interactive service may be applied to all types of the content, such as pictures, advertisements, documents, and videos.

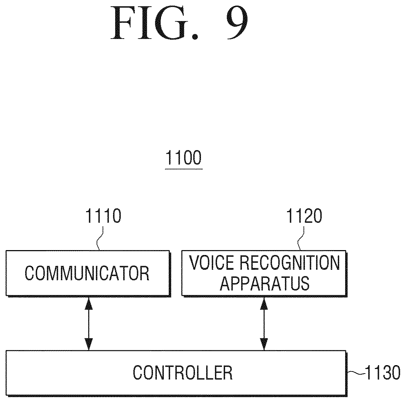

FIG. 9 is a block diagram of a remote control apparatus according to an exemplary embodiment.

Referring to FIG. 9, the remote control apparatus 1100 includes a communicator 1110, a voice recognition apparatus 1120, and a controller 1130.

Herein, the communicator 1110 may perform communication with the display apparatus 100 displaying a plurality of items. Specifically, the communicator 1100 may perform communication with the display apparatus 100 according to the wireless communication method or IR method. For the wireless communication method, radiofrequency identification (RFID), near field communication (NFC), Bluetooth, Zigbee, and Wi-Fi may be used.

The voice recognition apparatus 1120 may recognize a user voice. The voice recognition has already been described above, and will not be further explained below.

The controller 1130 may stop transmitting the pointing signal for selecting at least one item among a plurality of items when a preset event occurs. Further, the controller 1130 may activate the voice recognition apparatus 1120, receive a voice command regarding the selected item according to the pointing signal, and transmit the received voice command to the display apparatus 100.

Further, when the user voice is not recognized for a preset time while the voice recognition apparatus 1120 is activated, the controller 1130 may inactivate the voice recognition apparatus 1120 and transmit the pointing signal again.

Herein, the preset event may include at least one of an event in which a user command to select one item among a plurality of the items is input while a pointing signal indicating one item among a plurality of the items displayed on the display apparatus 100 is transmitted, and an event in which the pointing signal is transmitted for more than a preset time.

Thus, when a user command to select the indicated item is input while the pointing signal indicating one item among a plurality of the items displayed on the display apparatus 100 is transmitted to the display apparatus 100, or when the pointing signal indicating one item among a plurality of the items is maintained for the preset time, the controller 1130 may stop transmitting the pointing signal, activate the voice recognition apparatus and wait for a user voice command. Herein, a user command to select the indicated item may be input through a physical key provided on the remote control apparatus 1100. Further, a user may establish the preset time.

Further, the controller 1130 may receive a user voice command regarding the selected item and transmit to the display apparatus. Thus, the display apparatus 100 may perform a function corresponding to the user voice.

Further, as described above, when the user voice is not recognized for the preset time while the voice recognition apparatus 1120 is activated, the controller 1130 may determine that there is no user voice, and thus inactivate the voice recognition apparatus 1120 and automatically transmit the pointing signal again. Accordingly, battery consumption of the remote control apparatus 1100 can be optimized.

In the above exemplary embodiment, the voice recognition apparatus 1120 is included in the remote control apparatus 1100, although the exemplary embodiment is not limited to this specific example. Accordingly, the voice recognition apparatus 1120 may be included in the display apparatus 100 instead of being included in the remote control apparatus 1100.

Meanwhile, the remote control apparatus 1100 may additionally include a motion recognition apparatus, and the controller 1130 may control recognition of the user voice and the user motion, respectively, by keeping the voice recognition apparatus 1120 and the motion recognition apparatus active.

Further, the controller 1130 may generate controlling signals corresponding respectively to the recognized user voice and the recognized user motion, and transmit the control signals to the display apparatus 100.

The above-described operation that is applied when the imaging device and the microphone are provided on the remote control apparatus, may be equally applied to an example in which the motion recognition apparatus is additionally provided on the remote control apparatus 1100.

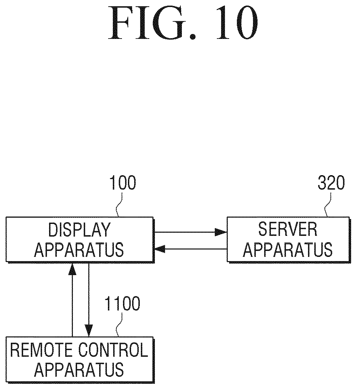

FIG. 10 is a diagram illustrating a system including a display apparatus and a remote control apparatus according to an exemplary embodiment.

Referring to FIG. 10, the system including the display apparatus and the remote control apparatus may include a display apparatus 100, a remote control apparatus 1100 and a server apparatus 320.

The display apparatus 100 may select one item among a plurality of the displayed items based on at least one of a pointing signal received from the remote control apparatus and recognized user motion, and perform a corresponding control operation based on the extracted keywords for executing the user voice command regarding the selected item.

Herein, the display apparatus 100 may directly analyze the selected item, and perform the control operation based on the extracted keyword. Alternatively, the display apparatus 100 may transmit information regarding the selected item to the server apparatus 320, receive the extracted keyword from the server apparatus 320 and perform the control operation.

The remote control apparatus 1100 may stop transmitting the pointing signal according to a preset event, receive a voice command regarding the item selected by the pointing signal by performing the voice recognition, and transmit the received voice command to the display apparatus 100.

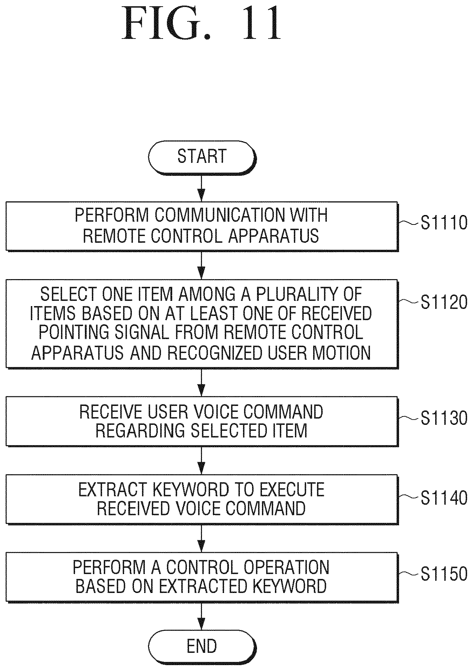

FIG. 11 is a flowchart illustrating a controlling method of a display apparatus including a display which displays a plurality of items and a recognizing apparatus which recognizes at least one among user voice and user motion according to an exemplary embodiment.

According to the method illustrated in FIG. 11, communication may be performed with the remote control apparatus, at S1110.

At S1120, one item may be selected among a plurality of items based on at least one of a pointing signal received from the remote control apparatus and recognized user motion.

At S1130, a user voice command regarding the selected item may be received.

Herein, when one item is selected among a plurality of items based on a pointing signal received from the remote control apparatus, the operation of receiving a voice command may involve stopping the control operation corresponding to the received pointing signal and performing voice recognition.

Further, the method of FIG. 11 may include performing a control operation corresponding to the received pointing signal again when the user voice is not recognized for a preset time while the voice recognition is performed.

Further, the operation of receiving a voice command may involve performing the voice recognition without performing the motion recognition, when one item is selected among a plurality of items based on the recognized motion.

Herein, the controlling method may include an operation of performing the motion recognition instead of the voice recognition, when the user voice is not recognized for a preset time while the voice recognition is performed.

At S1140, keywords may be extracted to execute the received voice command.

Herein, the operation of extracting keywords may involve analyzing the selected item and extracting keywords.

Further, the operation of extracting keywords may involve transmitting the information regarding the selected item to the external server, and receiving the extracted keywords from the external server.

At S1150, the control operation may be performed based on the extracted keywords.

Further, the controlling method illustrated in FIG. 11 may further include operations of receiving and registering the shapes of objects, and performing control operation corresponding to the recognized motion of the object when the registered shape of the object is recognized.

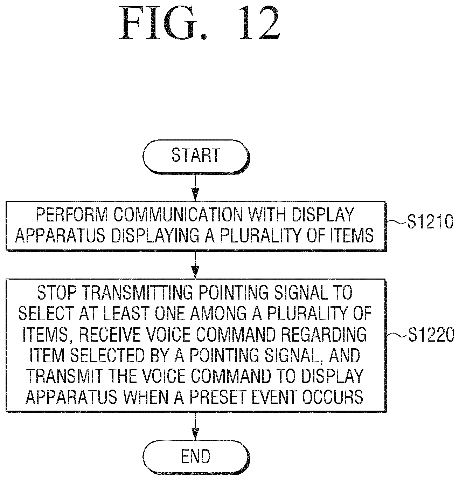

FIG. 12 is a flowchart provided to explain a controlling method of a remote control apparatus according to an exemplary embodiment.

According to the controlling method of FIG. 12, communication may be performed with a display apparatus displaying a plurality of items, at S1210.

At S1220, the operation of transmitting the pointing signal to select at least one item among a plurality of items may be stopped, when a preset event occurs, and a voice command regarding an item selected by the pointing signal may be received and transmitted to the display apparatus.

Herein, the preset event may include at least one among an event in which a user command to select one item among a plurality of the items is input while the pointing signal indicating one item among a plurality of the items displayed on the display apparatus is transmitted, and an event in which the pointing signal is transmitted for more than the preset time.

Meanwhile, a non-transitory computer readable recording medium storing a program for consecutively performing a controlling method according to an exemplary embodiment may be provided.

For example, a non-transitory computer readable recording medium storing a program may be provided, in which the program is for performing selection of one item among a plurality of the items based on at least one of a pointing signal received from the remote control apparatus and recognized user motion, receiving a user voice command regarding the selected item, extracting keywords to execute the received voice command, and performing the control operation based on the extracted keywords.

For another example, a non-transitory computer readable recording medium storing a program, which performs the stopping the transmitting of the pointing signal to select at least one item among a plurality of the items when a preset event occurs, and the receiving and transmitting a voice command regarding the item selected by the pointing signal to the display apparatus, may be provided.

Further, a computer program stored in the recording medium performs the following processes by being combined with the display apparatus: the performing communication with the remote control apparatus, the selecting one item among a plurality of the displayed items based on at least one of the pointing signal received from the remote control apparatus and the recognized user motion, the receiving a user voice command regarding the selected item, the extracting keywords to execute the received voice command, and the performing the control operation based on the extracted keywords.

Non-transitory computer readable recording medium indicate medium which store data semi-permanently and can be read by devices, not medium storing data temporarily such as register, cache, and memory. Specifically, the above various applications or programs may be stored and provided in non-transitory computer readable recording medium such as CD, DVD, hard disk, Blu-ray disk, USB, memory card, and ROM.

Communication between the components of the display apparatus may be performed through a bus. Further, each device may include a processor performing the above various processes such as a CPU or microprocessor.

Further, the foregoing exemplary embodiments and advantages are merely exemplary and are not to be construed as limiting the exemplary embodiments. The present teaching can be readily applied to other types of apparatuses. Also, the description of the exemplary embodiments is intended to be illustrative, and not to limit the scope of the invention, which is defined by the claims.

## Claims

1. A display apparatus, comprising:
a display (110) configured to display a plurality of items;
a communicator (140) configured to receive a pointing signal from a remote control apparatus;
an input device configured to receive at least one of a voice command and a gesture; and
a processor (130) configured to select one item among the plurality of items based on at least one of the pointing signal and the gesture, and in response to receiving the voice command regarding the selected item, perform a control operation based on a keyword extracted to execute the received voice command,
wherein the processor is further configured to control the input device to stop performing gesture recognition and to perform voice recognition in response to the item being selected based on the gesture.

2. The display apparatus of claim 1, wherein the processor is further configured to extract the keyword by analyzing the selected item.

3. The display apparatus of claim 1 or 2, wherein the processor is further configured to control the communicator to transmit information regarding the selected item to an external server, and receive the keyword from the external server.

4. The display apparatus of claim 1, 2 or 3, wherein the processor is further configured to control the input device to stop control operation corresponding to the received pointing signal and control the input device to perform voice recognition in response to the item being selected based on the pointing signal.

5. The display apparatus of claim 4, wherein the processor is further configured to control the input device to resume the control operation corresponding to the received pointing signal in response to the voice command not being received for a preset time.

6. The display apparatus of claim 5, wherein the processor is further configured to control the input device to stop performing voice recognition and to perform gesture recognition in response to not receiving the voice command for a preset time while the voice recognition is performed.

7. The display apparatus of any one of the preceding claims, wherein processor is further configured to control the input device to simultaneously perform voice recognition and gesture recognition.

8. The display apparatus of any one of the preceding claims, further comprising:
an object register (160) configured to store a shape of an object,
wherein the processor is further configured to control the input device to receive an object gesture performed by the object as the gesture and perform a control operation corresponding to the object gesture.

9. A system comprising a display apparatus (200) and a remote control apparatus (230),
wherein the display apparatus is configured to select one item among a plurality of displayed items based on at least one of a pointing signal received from the remote control apparatus and a recognized gesture, and perform a control operation based on a keyword extracted to execute a voice command regarding the selected item
wherein the display apparatus is further configured to control the input device to stop performing gesture recognition and to perform voice recognition in response to the item being selected based on the gesture, and
the remote control apparatus is configured to stop transmitting the pointing signal in response to a preset event, perform voice recognition, receive the voice command, and transmit the voice command to the display apparatus.

10. A method of controlling a display apparatus (200) including a display configured to display a plurality of items and an input device configured to receive at least one of a voice command and a gesture, the method comprising:
communicating with a remote control apparatus (230);
selecting one item among the plurality of items based on at least one of a pointing signal received from the remote control apparatus and the received gesture;
receiving a voice command regarding the selected item;
extracting a keyword to execute the received voice command; and
performing a control operation based on the extracted keyword,
wherein the receiving a voice command controls the input device to stop performing gesture recognition and performs voice recognition in response to the item being selected based on the gesture.

## Patentansprüche

1. Anzeigevorrichtung, die Folgendes umfasst:
ein Display (110), konfiguriert zum Anzeigen einer Mehrzahl von Gegenständen;
einen Kommunikator (140), konfiguriert zum Empfangen eines Zeigesignals von einer Fernsteuervorrichtung;
ein Eingabegerät, konfiguriert zum Empfangen eines Sprachbefehls und/oder einer Geste; und
einen Prozessor (130), konfiguriert zum Auswählen eines Gegenstands aus der Mehrzahl von Gegenständen auf der Basis des Zeigesignals und/oder der Geste und als Reaktion auf den Empfang des Sprachbefehls in Bezug auf den gewählten Gegenstand, zum Durchführen eines Steuervorgangs auf der Basis eines Schlüsselworts, das zum Ausführen des empfangenen Sprachbefehls extrahiert wurde,
wobei der Prozessor ferner konfiguriert ist zum Steuern des Eingabegeräts, um die Durchführung von Gestenerkennung zu stoppen und Spracherkennung als Reaktion auf den auf der Basis der Geste gewählten Gegenstand durchzuführen.

2. Anzeigevorrichtung nach Anspruch 1, wobei der Prozessor ferner zum Extrahieren des Schlüsselworts durch Analysieren des gewählten Gegenstands konfiguriert ist.

3. Anzeigevorrichtung nach Anspruch 1 oder 2, wobei der Prozessor ferner konfiguriert ist zum Steuern des Kommunikators, um Informationen über den gewählten Gegenstand zu einem externen Server zu übertragen und das Schlüsselwort von dem externen Server zu empfangen.

4. Anzeigevorrichtung nach Anspruch 1, 2 oder 3, wobei der Prozessor ferner konfiguriert ist zum Steuern des Eingabegeräts, um den Steuervorgang entsprechend dem empfangenen Zeigesignal zu stoppen und das Eingabegerät zum Durchführen von Spracherkennung als Reaktion auf die Wahl des Gegenstands auf der Basis des Zeigesignals zu steuern.

5. Anzeigevorrichtung nach Anspruch 4, wobei der Prozessor ferner konfiguriert ist zum Steuern des Eingabegeräts, um den Steuervorgang entsprechend dem empfangenen Zeigesignal als Reaktion darauf wiederaufzunehmen, dass der Sprachbefehl für eine voreingestellte Zeit nicht empfangen wurde.

6. Anzeigevorrichtung nach Anspruch 5, wobei der Prozessor ferner konfiguriert ist zum Steuern des Eingabegeräts, um die Durchführung von Spracherkennung zu stoppen und Gestenerkennung als Reaktion darauf durchzuführen, dass der Sprachbefehl für eine voreingestellte Zeit nicht empfangen wird, während der Spracherkennung durchgeführt wird.

7. Anzeigevorrichtung nach einem der vorherigen Ansprüche, wobei der Prozessor ferner konfiguriert ist zum Steuern des Eingabegeräts, um Spracherkennung und Gestenerkennung gleichzeitig durchzuführen.

8. Anzeigevorrichtung nach einem der vorherigen Ansprüche, die ferner Folgendes umfasst:
ein Objektregister (160), konfiguriert zum Speichern einer Form eines Objekts,
wobei der Prozessor ferner konfiguriert ist zum Steuern des Eingabegeräts, um eine vom Objekt durchgeführte Objektgeste als Geste zu empfangen und einen Steuervorgang entsprechend der Objektgeste durchzuführen.

9. System, das eine Anzeigevorrichtung (200) und eine Fernsteuervorrichtung (230) umfasst,
wobei die Anzeigevorrichtung konfiguriert ist zum Auswählen eines Gegenstands aus einer Mehrzahl von angezeigten Gegenständen auf der Basis eines von der Fernsteuervorrichtung empfangenen Zeigesignals und/oder einer erkannten Geste und zum Durchführen eines Steuervorgangs auf der Basis eines Schlüsselworts, das zum Ausführen eines Sprachbefehls in Bezug auf den gewählten Gegenstand extrahiert wurde,
wobei die Anzeigevorrichtung ferner konfiguriert ist zum Steuern des Eingabegeräts, um die Durchführung der Gestenerkennung zu stoppen und Spracherkennung als Reaktion auf den auf der Basis der Geste gewählten Gegenstand durchzuführen, und
die Fernsteuervorrichtung ferner konfiguriert ist zum Stoppen des Übertragens des Zeigesignals als Reaktion auf ein voreingestelltes Ereignis, zum Durchführen von Spracherkennung, zum Empfangen des Sprachbefehls und zum Übertragen des Sprachbefehls zur Anzeigevorrichtung.

10. Verfahren zum Steuern einer Anzeigevorrichtung (200) mit einem Display, konfiguriert zum Anzeigen einer Mehrzahl von Gegenständen, und einem Eingabegerät, konfiguriert zum Empfangen eines Sprachbefehls und/oder einer Geste, wobei das Verfahren Folgendes beinhaltet:
Kommunizieren mit einer Fernsteuervorrichtung (230);
Auswählen eines Gegenstands aus der Mehrzahl von Gegenständen auf der Basis eines von der Fernsteuervorrichtung empfangenen Zeigesignals und/oder der empfangenen Geste;
Empfangen eines Sprachbefehls in Bezug auf den gewählten Gegenstand;
Extrahieren eines Schlüsselworts zum Ausführen des empfangenen Sprachbefehls; und
Durchführen eines Steuervorgangs auf der Basis des extrahierten Schlüsselworts,
wobei das Empfangen eines Sprachbefehls das Eingabegerät steuert, um die Durchführung von Gestenerkennung zu stoppen und Spracherkennung als Reaktion auf den auf der Basis der Geste gewählten Gegenstand durchzuführen.

## Revendications

1. Appareil d'affichage, comportant :
un dispositif d'affichage (110) configuré pour afficher une pluralité d'éléments ;
un communicateur (140) configuré pour recevoir un signal de pointage en provenance d'un appareil de commande à distance ;
un dispositif d'entrée configuré pour recevoir au moins l'un parmi une commande vocale et un geste ; et
un processeur (130) configuré pour sélectionner un élément parmi la pluralité d'éléments en fonction d'au moins l'un parmi le signal de pointage et le geste, et, en réponse à la réception de la commande vocale se rapportant à l'élément sélectionné, pour réaliser une opération de commande en fonction d'un mot-clé extrait pour exécuter la commande vocale reçue,
dans lequel le processeur est par ailleurs configuré pour ordonner au dispositif d'entrée d'arrêter l'étape consistant à effectuer une reconnaissance gestuelle et d'effectuer la reconnaissance vocale en réponse à la sélection de l'élément en fonction du geste.

2. Appareil d'affichage selon la revendication 1, dans lequel le processeur est par ailleurs configuré pour extraire le mot-clé en analysant l'élément sélectionné.

3. Appareil d'affichage selon la revendication 1 ou la revendication 2, dans lequel le processeur est par ailleurs configuré pour ordonner au communicateur de transmettre des informations se rapportant à l'élément sélectionné à un serveur externe, et pour recevoir le mot-clé en provenance du serveur externe.

4. Appareil d'affichage selon la revendication 1, la revendication 2 ou la revendication 3, dans lequel le processeur est par ailleurs configuré pour ordonner au dispositif d'entrée d'arrêter l'opération de commande correspondant au signal de pointage reçu et pour ordonner au dispositif d'entrée d'effectuer une reconnaissance vocale en réponse à la sélection de l'élément en fonction du signal de pointage.

5. Appareil d'affichage selon la revendication 4, dans lequel le processeur est par ailleurs configuré pour ordonner au dispositif d'entrée de reprendre l'opération de commande correspondant au signal de pointage reçu en réponse au fait que la commande vocale n'a pas été reçue dans les limites d'un délai préréglé.

6. Appareil d'affichage selon la revendication 5, dans lequel le processeur est par ailleurs configuré pour ordonner au dispositif d'entrée d'arrêter l'étape consistant à effectuer une reconnaissance vocale et d'effectuer une reconnaissance gestuelle en réponse à l'absence de réception de la commande vocale dans les limites d'un délai préréglé alors que la reconnaissance vocale est effectuée.

7. Appareil d'affichage selon l'une quelconque des revendications précédentes, dans lequel le processeur est par ailleurs configuré pour ordonner au dispositif d'entrée d'effectuer simultanément une reconnaissance vocale et une reconnaissance gestuelle.

8. Appareil d'affichage selon l'une quelconque des revendications précédentes, comportant par ailleurs :
un registre d'objets (160) configuré pour stocker une forme d'un objet,
dans lequel le processeur est par ailleurs configuré pour ordonner au dispositif d'entrée de recevoir un geste d'objet effectué par l'objet comme étant le geste et d'effectuer une opération de commande correspondant au geste d'objet.

9. Système comportant un appareil d'affichage (200) et un appareil de commande à distance (230),
dans lequel l'appareil d'affichage est configuré pour sélectionner un élément parmi une pluralité d'éléments affichés en fonction d'au moins l'un parmi un signal de pointage reçu en provenance de l'appareil de commande à distance et un geste reconnu, et pour effectuer une opération de commande en fonction d'un mot-clé extrait pour exécuter une commande vocale se rapportant à l'élément sélectionné,
dans lequel l'appareil d'affichage est par ailleurs configuré pour ordonner au dispositif d'entrée d'arrêter l'étape consistant à effectuer une reconnaissance gestuelle et d'effectuer une reconnaissance vocale en réponse à la sélection de l'élément en fonction du geste, et
l'appareil de commande à distance est configuré pour arrêter la transmission du signal de pointage en réponse à un événement préréglé, effectuer une reconnaissance vocale, recevoir la commande vocale, et transmettre la commande vocale à l'appareil d'affichage.

10. Procédé de commande d'un appareil d'affichage (200) comprenant un dispositif d'affichage configuré pour afficher une pluralité d'éléments et un dispositif d'entrée configuré pour recevoir au moins l'un parmi une commande vocale et un geste, le procédé comportant les étapes consistant à :
communiquer avec un appareil de commande à distance (230) ;
sélectionner un élément parmi la pluralité d'éléments en fonction d'au moins l'un parmi un signal de pointage reçu en provenance de l'appareil de commande à distance et le geste reçu ;
recevoir une commande vocale se rapportant à l'élément sélectionné ;
extraire un mot-clé pour exécuter la commande vocale reçue ; et
effectuer une opération de commande en fonction du mot-clé extrait,
dans lequel l'étape consistant à recevoir une commande vocale ordonne au dispositif d'entrée d'arrêter l'étape consistant à effectuer une reconnaissance gestuelle et effectue une reconnaissance vocale en réponse à la sélection de l'élément en fonction du geste.
